Europäisches Patentamt

European Patent Office

Office européen des brevets

(19)

(11)  EP 0 954 195 B1

(12)  **FASCICULE DE BREVET EUROPEEN**

(45) Date de publication et mention
de la délivrance du brevet:
**26.02.2003  Bulletin 2003/09**

(51) Int Cl.⁷: **H04Q 7/38**

(21) Numéro de dépôt: **99400522.1**

(22) Date de dépôt: **04.03.1999**

(54) **Procédé de transmission dans un réseau radiotéléphonique UMTS, permettant de préparer un saut vers une cellule GSM pendant une communication dans une cellule UMTS**

Übertragungsverfahren in einem UMTS Funktelefonnetz mit Vorbereitung des Weiterreichens zu einer GSM-Zelle während einer bestehenden Kommunikation mit einer UMTS-Zelle

Transmission method in a UMTS radio-telephone network allowing handover preparation towards a GSM cell while communicating in an UMTS cell

(84) Etats contractants désignés:
**DE ES GB IT SE**

(30) Priorité: **28.04.1998  FR 9805286**

(43) Date de publication de la demande:
**03.11.1999  Bulletin 1999/44**

(73) Titulaire: **ALCATEL**
**75008 Paris (FR)**

(72) Inventeurs:
• **Gourgue, Frédéric**
**75017 Paris (FR)**

• **Roosen, Fabienne**
**92340 Bourg La Reine (FR)**

(74) Mandataire: **Sciaux, Edmond et al**
**COMPAGNIE FINANCIERE ALCATEL**
**Dépt. Propr. Industrielle,**
**30, avenue Kléber**
**75116 Paris (FR)**

(56) Documents cités:
**WO-A-96/38991          GB-A- 2 292 286**
**GB-A- 2 297 460         US-A- 5 479 410**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

L'invention concerne un procédé de transmission dons un réseau radiotéléphonique UMTS, et plus particulièrement lorsqu'il fonctionne en mode duplex par division temporelle (TDD). Le système UMTS est la troisième génération de systèmes de radiotéléphonie cellulaire. Le système GSM continuera à exister pendant un certain temps et on envisage de réaliser des terminaux adaptés pour utiliser alternativement les deux systèmes. Il faut donc permettre à ces terminaux de sauter d'une cellule UMTS à une cellule GSM ; au cours d'une communication, lorsque ces terminaux se déplacent. Un des critères de décision pour sauter d'une cellule à une autre est la puissance du signal reçu par le terminal mobile.

Pour permettre à un terminal GSM de sauter d'une cellule GSM à une autre, au cours d'une communication, sans l'interrompre, un procédé connu consiste à :

- émettre, à partir de chaque station de base, un signal continu sur un canal appelé canal balise ou BCCCH, qui transporte des signaux de synchronisation et de correction de fréquence qui sont propres à une cellule GSM ;
- recevoir dans chaque terminal mobile GSM, les canaux balises émis dans les cellules GSM voisines de la cellule GSM où il est situé, mesurer la puissance des signaux GSM éventuellement reçus, et préparer un éventuel saut en faisant une pré-synchronisation sur une cellule GSM voisine.

Chaque terminal mobile GSM est capable de faire une mesure de puissance tout en poursuivant une communication établie dans la cellule où il est situé. Il fait cette mesure pendant un intervalle de temps libre prévu entre une salve montante et une salve descendante. Un système de type GSM utilise des multitrames de 120 ms composées chacune de 26 trames ayant des durées identiques, chaque trame étant elle-même composée de 8 intervalles temporels. Dans chaque trame, une salve montante occupe un certain nombre d'intervalles temporels et une salve descendante occupe un certain nombre des intervalles temporels restants. L'intervalle libre entre une salve montante et une salve descendante a une durée de 2 ou 4 intervalles temporels, en général, avec une exception notable : dans la 26ème trame de chaque multitrame, l'intervalle libre a une durée correspondant à 12 intervalles temporels, c'est à dire 6ms. Cet intervalle libre de 6 ms permet, toutes les 120 ms, de faire une partie de la pré-synchronisation. Celle-ci consiste à décoder les signaux de correction de fréquence et les signaux de synchronisation. Ces signaux de correction de fréquence et de synchronisation sont répartis sur un second type de multitrame, correspondant à 51 trames. Par conséquent, les opérations de pré-synchronisation peuvent durer jusqu'à 1,3 secondes, avec une durée moyenne de l'ordre de 0,6 seconde.

Pour le système UMTS, un procédé de transmission actuellement envisagé est appelé multiplex par division temporel (TDD, Time Division Multiplex). Il utilise des trames ayant des durées identiques, chaque trame étant elle-même composée d'intervalles temporels ayant chacun une longueur donnée. Dans chaque trame, une première partie est allouée à une salve montante, et le reste de la trame est allouée à une trame descendante, ou inversement. Le nombre maximal des intervalles temporels alloués à la slave montante et le nombre maximal des intervalles temporels alloués à la salve descendante sont fixes et identiques pour tous les terminaux, au moins pour tous les terminaux situés dans un cluster de cellules UMTS. Le rapport entre ces-deux nombres est choisi en fonction de la nature du trafic prévu. Si le trafic prévu est symétrique, cette proportion est a priori égale à 50%. Cette proportion peut être choisie supérieure à 50% si le trafic prévu est fortement asymétrique.

Actuellement, rien n'est prévu pour préparer le saut d'une cellule UMTS à une cellule GSM. On peut envisager de réaliser un terminal comportant deux récepteurs fonctionnant simultanément, un récepteur UMTS étant utilisé pour une communication UMTS pendant qu'un récepteur GSM serait utilisé pour préparer un sauf vers une cellule GSM, mais c'est une solution qui augmenterait le coût et l'encombrement des terminaux UMTS.

Le document GB 2.292.286 concerne le problème de la préparation du saut d'un réseau à répartition par division temporel à un autre, et il décrit une solution ayant différentes variantes basées sur la détection d'un conflit par le terminal. Il y a conflit lorsque le terminal émet ou reçoit dans un premier réseau à un moment où ce terminal doit recevoir ou émettre dans le second réseau. Lorsqu'il détecte un conflit, le terminal exécute un processus de résolution de conflit. Il y a deux solutions décrites pour résoudre le conflit :

- Une solution consiste à modifier le comportement du terminal : Le contrôleur du terminal prend l'initiative de rechercher et d'utiliser des intervalle libres, situés entre les intervalles utilisés pour communiquer avec le premier réseau, ces intervalles libres étant utilisés alors pour confirmer, ou rechercher périodiquement, la présence du second réseau.
- Une autre solution consiste à modifier le comportement du second réseau. Le contrôleur du terminal prend l'initiative d'envoyer du terminal vers l'un des deux réseaux un ordre, pour que ce réseau attribue au terminal un intervalle temporel tel qu'il n'y ait plus de conflit.

Il apparaît que dans tous les cas le terminal doit détecter un conflit présente ou à avenir, puis prendre une initiative pour résoudre ce conflit. Le terminal doit donc être relativement complexe pour réaliser ces tâches.

Le but de l'invention est de proposer une solution meilleure que les solutions connues.

Selon l'invention, un procédé de transmission dons un réseau radio téléphonique UMTS, permettant de préparer un saut vers une cellule GSM pendant une communication dans une cellule UMTS, consistant à transporter des informations dans des trames ; chaque trame étant composée d'une pluralité d'intervalles temporels ; des intervalles temporels de chaque trame étant alloués à des terminaux radio téléphoniques ; **est caractérisé** en ce que pour un terminal donné, il consiste en outre, à allouer des intervalles temporels à un terminal radio téléphonique donné, de façon à laisser libre une suite continue d'intervalles temporels, avec une périodicité égale à un multiple entier de la durée d'une trame, et dont la durée est au moins égale à une durée prédéterminée permettant de recevoir le canal balise d'une station de base GSM et de faire une pré-synchronisation sur cette station de base GSM.

Le procédé ainsi caractérisé permet de n'utiliser qu'un seul récepteur pour réaliser une communication UMTS et préparer un saut vers une cellule GSM, quasi-simultanément, grâce à l'intervalle libre ainsi ménagé systématiquement au moins dans certaines trames UMTS.

Selon un mode de mise en oeuvre particulier, le procédé selon l'invention consiste en outre à réduire l'étalement spectrale d'autres intervalles temporels transportant des données, afin d'augmenter leur capacité de transport.

Le procédé ainsi caractérisé permet de n'utiliser qu'un seul récepteur même lorsque le terminal est utilisé pour un service à débit élevé, par exemple pour recevoir des signaux vidéo ou des fichiers, parce que ce procédé permet d'augmenter la capacité de transport des intervalles effectivement alloués et permet donc d'augmenter le nombre d'intervalles libres jusqu'à obtenir un intervalle libre de durée suffisante pour mesurer la puissance des signaux GSM éventuellement reçus, et préparer un éventuel saut en faisant une pré-synchronisation sur une cellule GSM voisine.

L'invention a aussi pour objet une station de base et un terminal comportant des moyens pour la mise en oeuvre de ces procédés.

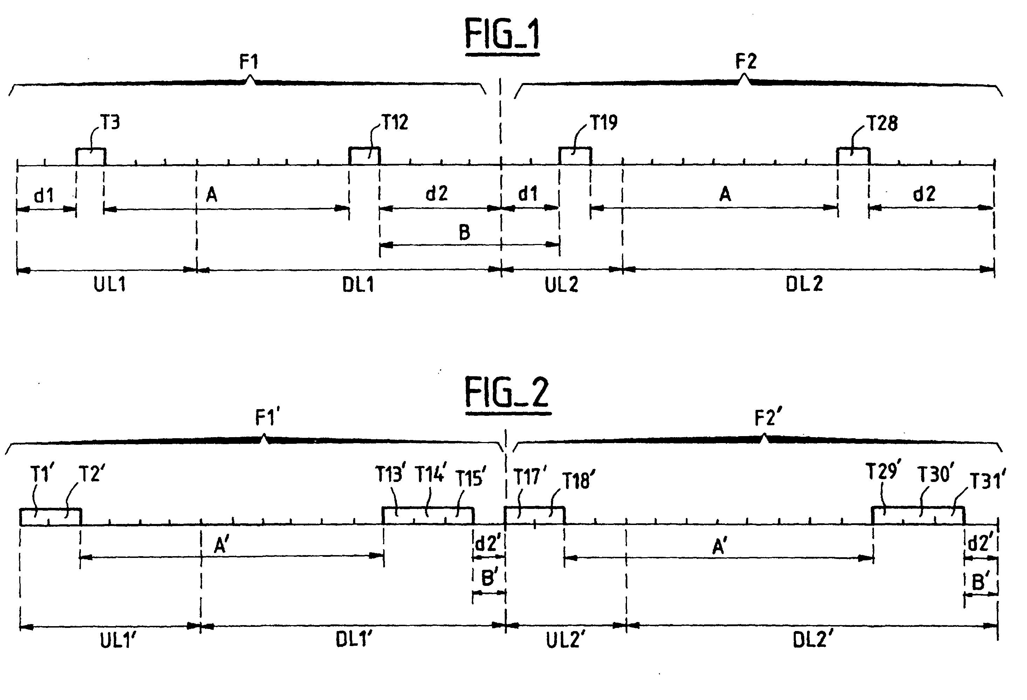

L'invention sera mieux comprise et d'autres caractéristiques apparaîtront à l'aide de la description ci-dessous et des figures l'accompagnant : Les figures 1 et 2 représentent respectivement deux exemples de mise en oeuvre du procédé selon l'invention, respectivement à faible débit et à débit élevé.

Le procédé selon l'invention est appliqué à toutes les trames UMTS, ou bien n'est appliqué qu'à une seule trame dans une multitrame UMTS constituée d'un nombre de trames tel que sa durée soit égale à la durée des multitrames GSM (120 ms). Considérons tout d'abord le cas où le procédé est appliqué identiquement à toutes les trames.

La **figure 1** représente deux trames UMTS successives F1 et F2, ayant une durée TF de 10 ms chacune. Chaque trame est composée de N intervalles temporels d'une durée TS, N étant égal à 16, et TS étant égale à 0,625 ms par exemple.

L'allocation des intervalles temporels d'une trame à des terminaux est décidée par le réseau UMTS indépendamment pour chaque terminal mobile, en fonction du service demandé par l'usager de chaque terminal. Un terminal qui demande seulement l'établissement d'une communication vocale n'a besoin que d'un intervalle temporel pour la liaison montante et un intervalle temporel pour la liaison descendante. Dans cet exemple, le nombre maximal des intervalles temporels alloués à la salve montante est égal à six, et le nombre maximal des intervalles temporels alloués à la salve descendante est égal à dix, dans toutes les trames. Dans cet exemple, le terminal considéré a demandé seulement l'établissement d'une communication téléphonique, donc un faible débit. Dans la trame F1, le réseau alloue seulement un intervalle T3, dons la partie UL1 qui est réservée à la liaison montante, et un intervalle T12, dans la partie DL1 qui est réservée à la liaison descendante. Dans la trame F2, le réseau alloue seulement un intervalle T19, dans la partie UL2 qui est réservée à la liaison montante, et un intervalle T29, dans la partie DL2 qui est réservée à la liaison descendante. Il n'y a donc que deux intervalles temporels occupés dans chaque trame.

Dans la trame F1, le terminal considéré n'émet pas et ne reçoit pas de signaux UMTS pendant :

- une plage de durée d1.TS qui va du début de la trame F1 à l'intervalle temporel T3,
- une plage de durée A.TS entre les intervalles temporels T3 et T1 2,
- et une plage de durée d2.TS entre l'intervalle temporel T12 et la fin de la trame F1.

Dans la trame F2, le terminal considéré n'émet pas et ne reçoit pas de signaux UMTS pendant :

- une plage de durée d1. TS qui va du début de la trame F2 à l'intervalle temporel T19,
- une plage de durée A.TS entre les intervalles temporels T19 et T28,
- et une plage de durée d2.TS entre l'intervalle temporel T28 et la fin de la trame F2.

Deux types de plage sont susceptibles d'être utilisés pour recevoir les signaux GSM, dans cet exemple :

- les plages de durées A.TS = N.TS - 2TS - (d1 +d2).TS
- et les plages de durées B.TS = (d1 + d2) .TS

Pour permettre la pré-synchronisation dans une cellule GSM, on estime nécessaire de recevoir le canal balise GSM pendant une durée continue égale à au moins la durée d'une trame GSM (4,7 ms) plus un peu de temps pour l'initialisation du récepteur, soit environ 5 ms, toutes les 120 ms. Selon l'invention, le réseau UMTS alloue les intervalles de temps des trames, au terminal considéré, de telle façon que le terminal considéré n'a pas à émettre et n'a pas à recevoir des signaux UMTS pendant un intervalle continu ayant une durée au moins égale à 5 ms, avec une périodicité égale à un multiple entier de la durée d'une trame.

Dans l'exemple considéré, on peut constituer le tableau suivant pour déterminer comment choisir d1+d2, c'est à dire comment allouer les intervalles temporels au terminal considéré, sachant que N = 16 et TS = 10 ms :

| d1 + d2 | A | B | Conclusion |
|---|---|---|---|
| $\geq 8$ | < 5ms | $\geq 5$ ms | La réception GSM peut être faite pendant la plage B |
| 7 | 4,37 ms | 4,37 ms | Il n'y a pas de plage de durée au moins égale à 5 ms. La synchronisation risque d'être plus longue |
| $\leq 6$ | $\geq 5$ ms | < 5ms | La réception GSM peut être faite pendant la plage A |

Des raisons technologiques inhérentes au mode TDD restreignent un peu plus les choix possibles pour allouer les intervalles temporels au terminal considéré : Il faut un certain temps de commutation entre l'émission et la réception des signaux UMTS. Les intervalles alloués à la liaison montante et ceux alloués à la liaison descendantes ne doivent pas être accolés mais doivent être séparés par un intervalle temporel au moins. Cette contrainte interdit les allocations telles que :

$$d1 + d2 = 0 \text{ et } d1 + d2 = 14$$

Dans l'exemple représenté sur la figure 1,

$$d1 + d2 = 6 \text{ et donc } A.TS = 8 \text{ x } 0,625 \text{ ms} = 5ms$$

La plage libre A convient donc pour recevoir les signaux GSM.

La **figure 2** représente deux trames successives F1' et F2' dans le cas d'un terminal qui utilise un service à débit plus élevé. Le terminal a donc besoin d'un plus grand nombre d'intervalles temporels. Les références analogues à celles de la figure 1 ont l'attribut '. Dans cet exemple, N = 16 et TF = 10ms comme précédemment. Le réseau attribue au terminal considéré des intervalles temporels T1', T2' pour la liaison montante et des intervalles T13', T14', T15', pour la liaison descendante, dans la trame F1'. Il attribue au terminal considéré des intervalles temporels T17', T18' pour la liaison montante et des intervalles T29', T30', T31', pour la liaison descendante, dans la trame F1'. Il y a donc 5 intervalles temporels occupés.

Deux types de plage sont susceptibles d'être utilisés pour recevoir les signaux GSM :

- les plages de durées A'.TS = 16TS - 5TS - (d1'+d2').TS
- et les plages de durées B'.TS = (d1'+ d2').TS

Dans l'exemple représenté sur la figure 2, on a choisit d1' = 0 pour minimiser la durée de B'. On a alors A' = (11 - d2').TS

d2' est choisi égal à 1 pour minimiser B', sans accoler les intervalles d'émission et les intervalles de réception UMTS. On obtient A' = 10TS = 6,25 ms qui est supérieur aux 5 ms requis. Il est donc possible, pour le terminal considéré, de mesurer la puissance des signaux GSM éventuellement reçus, et préparer un éventuel saut en faisant une pré-synchronisation sur une cellule GSM voisine.

Si le terminal doit émettre et recevoir des données à un débit encore plus élevé, le nombre d'intervalles temporels alloués à la liaison descendante est a priori supérieur à 5. Il n'est plus possible de laisser libres 10 intervalles temporels pour obtenir un intervalle continu d'au moins 5 ms. Les terminaux à haut débit étant plus coûteux que les terminaux à faible débit, on peut envisager de les munir d'un second récepteur.

Une autre solution consiste à réduire le facteur d'étalement spectral lors de l'émission des données, dans le sens montant et dans le sens descendant. Il est alors possible de transmettre plus de données dans chaque intervalle temporel. Le réseau alloue alors moins d'intervalles temporels aux données, et laisse libre un nombre d'intervalles temporels au moins égal à 10, pour qu'il y ait un intervalle libre de 6,25 ms. En contrepartie, il est nécessaire d'augmenter la puissance d'émission pour garder un même rapport signal sur bruit.

La portée de l'invention n'est pas limitée au cas où un intervalle libre est ménagé dans toutes les trames UMTS. Selon une variante de réalisations, Les trames UMTS constituent des multitrames comportant par exemple 12 trames de 10 ms, pour avoir la même durée que les multitrames GSM, et une seule et trame par multitrame est aménagée pour comporter un intervalle libre d'au moins 5 ms. Cette variante permet d'obtenir les mêmes performances de la procédure de saut de cellule GSM, que dans un terminal GSM classique.

Une variante de la précédente solution consiste à laisser totalement libre une trame de chaque multitrame, la 12ème de chaque multitrame UMTS par exemple. Cette trame laisse alors un intervalle libre ayant une durée de 10 ms qui est supérieure à la durée minimale de 5 ms. Les données descendantes qui auraient dues être transportées dans cette trame sont transportées dans les autres trames de la même multitrame, en utilisant la réduction de l'étalement de spectre pour augmenter leur capacité de transport. En contrepartie la puissance d'émission doit être augmentée.

## Revendications

**1.** Procédé de transmission dans un réseau radio téléphonique UMTS, permettant de préparer un saut vers une cellule GSM pendant une communication dans une cellule UMTS, consistant à transporter des informations dans des trames (F1, F2 ; F1' F2'); chaque trame étant composée d'une pluralité d'intervalles temporels ; des intervalles temporels (T3, T12, T19, T20) de chaque trame étant alloués à des terminaux radio téléphoniques ;
   **caractérisé en ce qu'**il consiste en outre, à allouer des intervalles temporels à un terminal radio téléphonique donné, de façon à laisser libre une suite continue d'intervalles temporels (T13', T14', T15'), avec une périodicité égale à un multiple entier de la durée d'une trame, et dont la durée est au moins égale à une durée prédéterminée permettant de recevoir le canal balise d'une station de base GSM et de faire une pré-synchronisation sur cette station de base GSM.

**2.** Procédé selon la revendication 1, **caractérisé en ce qu'**il consiste en outre, à réduire l'étalement spectrale d'autres intervalles temporels (T1', ..., T6'; T8') transportant des données, afin d'augmenter leur capacité de transport.

**3.** Réseau radio téléphonique UMTS permettant de préparer un saut vers une cellule GSM pendant une communication dans une cellule UMTS, comportant des moyens de transmission pour transporter des informations dans des trames (F1, F2 ; F1', F2') ; chaque trame étant composée d'une pluralité d'intervalles temporels ; des intervalles temporels (T3, T12, T19, T20) de chaque trame étant alloués à des terminaux radio téléphoniques ;
   **caractérisé en ce que** ces moyens de transmission comportent des moyens pour allouer des intervalles temporels à un terminal radio téléphonique donné, de façon à laisser libre une suite continue d'intervalles temporels (T13', T14', T15'), avec une périodicité égale à un multiple entier de la durée d'une trame, et dont la durée est au moins égale à une durée prédéterminée permettant de recevoir le canal balise d'une station de base GSM et de faire une pré-synchronisation sur cette station de base GSM.

**4.** Terminal radio téléphonique dans un réseau radio téléphonique UMTS selon la revendication 3.

**5.** Station de base radio téléphonique dans un réseau radio téléphonique UMTS selon la revendication 3.

## Claims

**1.** A method of transmission in a UMTS mobile telephone network enabling preparation for handover to a GSM cell during a call in a UMTS cell, the method consisting in transporting information in frames (F1, F2; F1', F2') each made up of a plurality of time slots, time slots (T3, T12, T19, T20) from each frame being allocated to mobile telephone terminals, **characterized in that** it further consists in allocating time slots to a given mobile telephone terminal so as to leave free one continuous series of time slots (T13', T14', T15'), at intervals equal to an integer multiple of the duration of a frame, whose total duration is at least equal to a predetermined time period enabling reception of the broadcast control channel from a GSM base transceiver station and pre-synchronization to that GSM base transceiver station.

**2.** A method according to claim 1, **characterized in that** it further consists in reducing the spectrum spreading of other time slots (T1', ..., T6'; T8') transporting data in order to increase their transport capacity.

**3.** A UMTS mobile telephone network enabling preparation for handover to a GSM cell during a call in a UMTS cell, the network including transmission means for transporting information in frames (F1, F2; F1', F2') each made up of a plurality of time slots, time slots (T3, T12, T19, T20) from each frame being allocated to mobile telephone terminals, **characterized in that** said transmission means include means for allocating time slots to a given mobile telephone terminal so as to leave free one continuous series of time slots (T13', T14', T15'), at intervals equal to an integer multiple of the duration of a frame, whose total duration is at least equal to a predetermined time period enabling reception of the broadcast control channel from a GSM base transceiver station and pre-synchronization to that GSM base transceiver station.

**4.** A mobile telephone terminal in a UMTS mobile telephone network according to claim 3.

**5.** A mobile telephone base transceiver station in a UMTS mobile telephone network according to claim 3.

**Patentansprüche**

**1.** Verfahren zur Übertragung in einem UMTS-Funktelefonnetz, das es erlaubt, einen Sprung zu einer GSM-Zelle während einer Kommunikation in einer UMTS-Zelle vorzubereiten, welches darin beruht, Informationen in Rahmen (F1, F2; F1', F2') zu transportieren, wobei jeder Rahmen aufgebaut ist aus einer Mehrzahl von Zeitintervallen und Zeitintervalle (T3, T12, T19, T20) jedes Rahmens Funktelefon-Endgeräten zugeteilt sind; **dadurch gekennzeichnet, dass** es ferner darin beruht, Zeitintervalle einem gegebenen Funktelefon-Endgerät so zuzuteilen, dass eine kontinuierliche Folge von Zeitintervallen (T13', T14', T15') mit einer Periodizität gleich einem ganzzahligen Vielfachen der Dauer eines Rahmens frei bleibt, deren Dauer wenigstens gleich einer vorgegebenen Dauer ist, die es erlaubt, den Bakenkanal einer GSM-Basisstation zu empfangen und eine Vorsynchronisation auf diese Basisstation durchzuführen.

**2.** Verfahren nach Anspruch 1, **dadurch gekennzeichnet, dass** es ferner darin beruht, die spektrale Spreizung anderer Zeitintervalle (T1',...,T6';T8'), die Daten transportieren, zu verringern, um ihre Transportkapazität zu erhöhen.

**3.** UMTS-Funktelefonnetz, das es erlaubt, einen Sprung zu einer GSM-Zelle während einer Kommunikation in einer UMTS-Zelle vorzubereiten, mit Übertragungsmitteln zum Transportieren von Informationen in Rahmen (F1, F2; F1', F2'); wobei jeder Rahmen aufgebaut ist aus einer Mehrzahl von Zeitintervallen und Zeitintervalle (T3, T12, T19, T20) jedes Rahmens Funktelefon-Endgeräten zugeteilt sind,
**dadurch gekennzeichnet, dass** die Übertragungsmittel Mittel umfassen, um Zeitintervalle einem gegebenen Funktelefon-Endgerät so zuzuteilen, dass eine kontinuierliche Folge von Zeitintervallen (T13', T14', T15') mit einer Periodizität gleich einem ganzzahligen Vielfachen der Dauer eines Rahmens frei bleibt, deren Dauer wenigstens gleich einer vorgegebenen Dauer ist, die es erlaubt, den Bakenkanal einer GSM-Basisstation zu empfangen und eine Vorsynchronisation auf diese GSM-Basisstation durchzuführen.

**4.** Funktelefon-Endgerät in einem UMTS-Funktelefonnetz nach Anspruch 3

**5.** Funktelefon-Basisstation in einem UMTS-Funktelefonnetz nach Anspruch 3.

## FIG_1

F1      F2

T3    T12    T19    T28

d1    A    d2   d1    A    d2

B

UL1    DL1    UL2    DL2

## FIG_2

F1'      F2'

T1' T2'    T13' T14' T15'   T17' T18'    T29' T30' T31'

A'    d2'    A'    d2'

B'      B'

UL1'    DL1'    UL2'    DL2'

EP 0 954 195 B1